Europäisches Patentamt

(19) European Patent Office  (11) Numéro de publication: **0 061 946**
**B1**
Office européen des brevets

(12) **FASCICULE DE BREVET EUROPEEN**

(45) Date de publication du fascicule du brevet:
03.10.84

(51) Int. Cl.³: **A 23 C 9/123**

(21) Numéro de dépôt: **82400364.4**

(22) Date de dépôt: **03.03.82**

(54) **Procédé de fabrication d'un lait fermenté.**

(30) Priorité: **25.03.81 FR 8105974**

(43) Date de publication de la demande:
**06.10.82 Bulletin 82/40**

(45) Mention de la délivrance du brevet:
**03.10.84 Bulletin 84/40**

(84) Etats contractants désignés:
**AT BE CH DE GB IT LI LU NL SE**

(56) Documents cités:
**GB - A - 1 157 195**

**J. RASIC et al.: "YOGHURT", 1978 Techn. Dairy Publ.
House, COPENHAGEN (DK), pages 285, 303, 304,
306-309, 319-321
DEUTSCHE MOLKEREI-ZEITUNG, vol. 92, no. F14, 1971.
H. BAUSTIAN et al.: "Joghurt und
Sauermilcherzeugnisse, Stand er Verfahrenstechnik",
pages 587, 588, 590-592, 595**

(73) Titulaire: **COOPERATIVE LAITIERE DE LA REGION
NANTAISE Société dite:, 11, rue Crucy, F-44046 Nantes
Cedex (FR)**

(72) Inventeur: **Ferialdi, Riccardo, "Lande de Beauchêne",
F-44260 La Chapelle Launay (FR)**
Inventeur: **Moisan, Philippe, "Les Mesnées",
F-44130 Saint Emilien de Blain (FR)**

(74) Mandataire: **Moncheny, Michel et al, c/o Cabinet
Lavoix 2 Place d'Estienne d'Orves, F-75441 Paris
Cedex 09 (FR)**

## Description

La présente invention concerne un lait fermenté et son procédé de fabrication.

Les laits fermentés sont connus depuis très longtemps, notamment dans les pays arabes ou en Bretagne (sous le nom de lait Ribot).

Les laits fermentés sont actuellement fabriqués de la façon suivante: le lait cru est tout d'abord écrémé, puis il est pasteurisé afin de détruire les germes nuisibles et de réduire la flore banale. Après refroidissement à 20°C, il est ensemencé avec des ferments lactiques sélectionnés, généralement sous forme de mélanges de deux ou plusieurs types de germes. Le lait est laissé à une température de 18 à 20°C pendant une douzaine d'heures, de façon à obtenir un coagulum caractéristique du lait fermenté, puis il est refroidi à 10°C et subit un léger brassage avant d'être conditionné dans des emballages.

Ce produit présente un léger goût acide, frais, qui est apprécié des consommateurs, il est d'une consistance liquide, après brassage, et de couleur blanche. Dans ce produit, les ferments sont vivants.

Ce produit peut être conservé à une température d'environ 5°C pendant environ trois semaines.

Sa durée de conservation est donc très limitée et nécessite un stockage au froid.

Un article de J. Rasic («Yoghurt», 1978, «Techn. Dairy Publ. House», p. 285) décrit une technique analogue mais utilisant des conditions aseptiques. Toutefois, dans cette technique, comme dans la technique classique, on interrompt la fermentation par abaissement de la température, obtenant ainsi un produit contenant des germes vivants.

La présente invention vise à fournir un lait fermenté qui présente une durée de conservation nettement plus grande et qui, en outre, peut être conservé à température ambiante.

A cet effet, la présente invention a pour objet un procédé de fabrication d'un lait fermenté ayant une longue durée de conservation, caractérisé en ce que l'on introduit de façon aseptique des germes de fermentation lactique dans de l'eau stérilisée, on ajoute dans des conditions stériles l'eau contenant les germes à du lait stérilisé UHT, on conditionne de façon aseptique le mélange obtenu dans des récipients stériles, puis on laisse se développer et s'achever la fermentation lactique au sein de ces récipients, obtenant ainsi un lait fermenté ne présentant pratiquement plus de germes vivants.

Le procédé de l'invention se distingue de la technique antérieure à la fois par la nature du lait ensemencé, par les conditions d'ensemencement, les conditions de conditionnement et par les conditions de fermentation et fournit un produit qui, bien que présentant un goût semblable au lait fermenté traditionnel, se différencie nettement du lait fermenté traditionnel.

Ainsi, en premier lieu, la nature du lait ensemencé est différente. Au lieu d'utiliser du lait pasteurisé, on utilise du lait stérilisé UHT (ultra haute température), c'est-à-dire du lait ayant subi un traitement thermique de stérilisation continu à température élevée pendant un court laps de temps.

Ce traitement de stérilisation classique est effectué généralement à une température d'environ 140°C pendant 2 s.

Il est avantageusement précédé d'une pasteurisation destinée à éliminer la plupart des germes et permet d'obtenir un lait dépourvu de germes.

Par ailleurs, les conditions d'ensemencement sont différentes. Alors que, dans la technique antérieure, on ne prenait pas de précautions particulières du point de vue de l'aseptie, dans le procédé selon la présente invention il est nécessaire d'effectuer l'ensemencement de façon aseptique.

A cet effet, on introduit des germes de fermentation lactique dans de l'eau stérilisée dans des conditions aseptiques de façon à éviter l'introduction de tout autre germe.

La stérilisation de l'eau peut être effectuée sous l'action d'un rayonnement ultraviolet.

Puis on ajoute une quantité déterminée d'eau contenant les germes de fermentation lactique au lait stérilisé UHT dans des conditions stériles. Cela peut être aisément réalisé par injection de l'eau contenant les germes de fermentation lactique dans la canalisation conduisant le lait UHT de l'installation de stérilisation UHT à l'installation de conditionnement.

Les conditions de conditionnement sont également différentes puisque, au lieu d'effectuer le conditionnement après fermentation et sans prendre de précautions particulières du point de vue de l'aseptie, dans le procédé selon l'invention on effectue le conditionnement de façon aseptique dans des récipients stériles, et cela avant la fermentation.

A cet effet, on peut utiliser les installations de conditionnement aseptique utilisées pour le conditionnement du lait UHT, tel le système Tétra Pak.

Ce système utilise un récipient en carton qui est formé par la machine de conditionnement après trempage dans de l'eau oxygénée et séchage à l'air chaud. Le remplissage des récipients est effectué dans une enceinte stérile, puis les récipients sont scellés.

Les conditions de fermentation sont également différentes, puisqu'au lieu d'effectuer une fermentation pendant une douzaine d'heures à une température de 18 à 20°C, puis de la stopper par refroidissement, dans le procédé selon l'invention on laisse se développer et s'achever la fermentation lactique. Cela peut être effectué en conservant les récipients à une température d'au moins 18°C pendant une semaine.

Au-delà de cette période, la fermentation lactique s'arrête car, d'une part, le lactose du lait est en partie épuisé et, d'autre part, les bactéries meurent par autolyse.

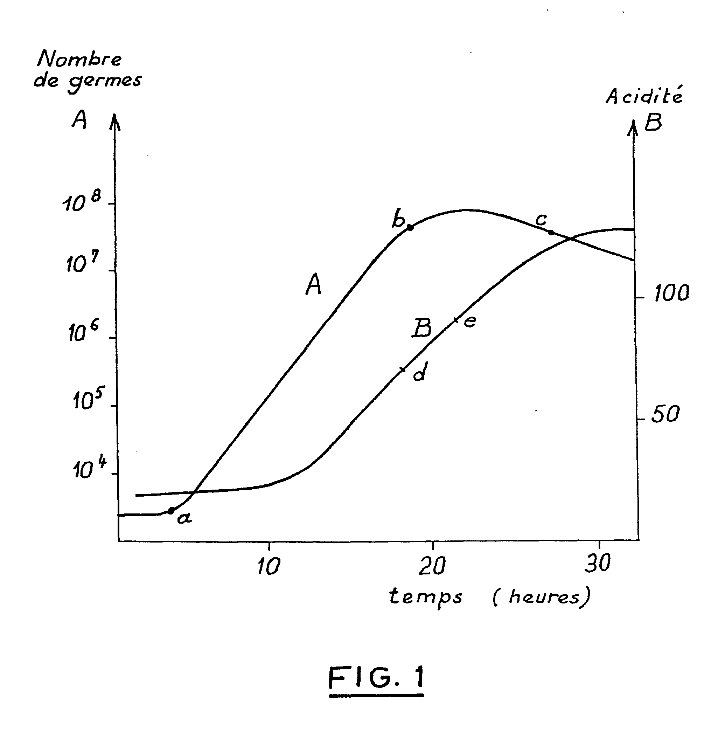

Cela s'explique aisément au vu de la fig. 1 annexée qui donne la courbe de croissance (A) et la courbe d'acidification (B). La courbe de croissance fait apparaître une courte phase de latence (jusqu'au point a), puis une phase de développement (jusqu'au point b), une phase stationnaire(entre b et c), puis une phase de déclin. Dans le même temps, l'acidité s'est accrue et lorsqu'elle se situe entre les points d et e, le lait se transforme en gel, ce qui correspond à la formation du coagulum.

Au-delà d'un certain temps, les bactéries lactiques meurent et l'on obtient un lait fermenté d'un goût légèrement acide et pratiquement dépourvu de germes, car l'autolyse les a éliminés.

Un tel produit est stable et ne subit aucune dégradation physico-chimique.

C'est seulement l'étanchéité défectueuse de l'emballage qui risque de limiter la conservation de ce lait fermenté.

En pratique, il est possible de conserver un tel lait fermenté pendant au moins quatre mois à température ambiante, ce qui constitue un avantage très important par rapport au lait fermenté traditionnel.

Comme germes de fermentation lactique utilisables dans le procédé selon l'invention, on peut citer les germes suivants:
— *streptococus cremoris*
— *streptococus lactis*
— *streptococus diacetilactis*
— *streptococus thermophilus*
— *lactobacillus bulgaricus*
— *lactobacillus acidophilus*
— *lactobacillus bifidus*
— *leuconostoc citrovorum*

Ces germes sont avantageusement utilisés sous forme de grêlons congelés. Ils peuvent être ajoutés à l'eau stérilisée à raison d'environ 1 g/l d'eau stérilisée, ce qui fournit une population de $5 \cdot 10^5$ à $10^7$ germes par ml.

L'eau contenant ces germes est ajoutée au lait stérilisé UHT avantageusement à raison d'au moins 5 ml/l de lait.

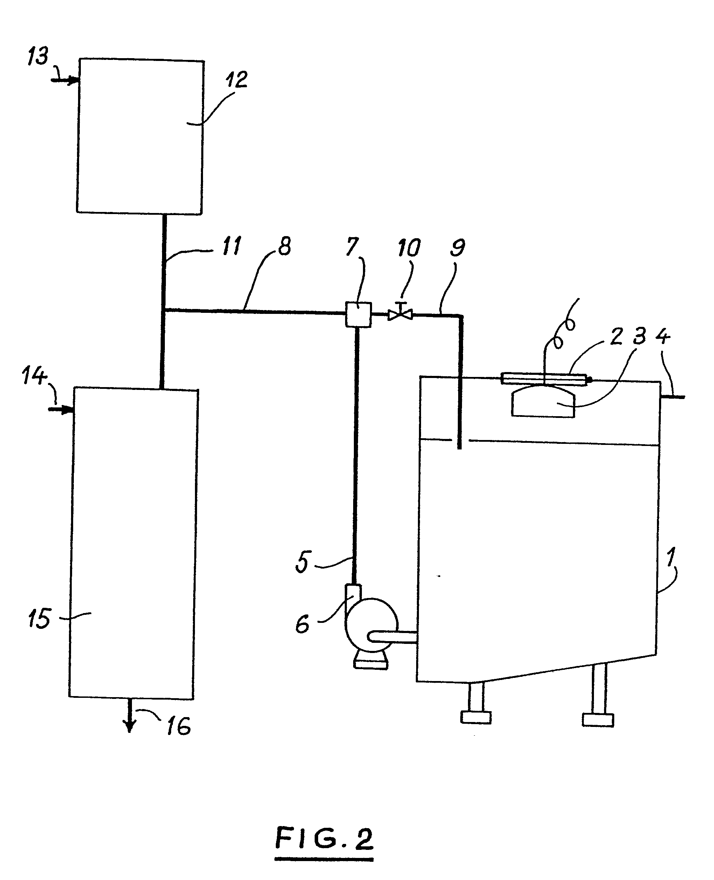

On a représenté sur la fig. 2 le schéma d'une installation permettant la mise en œuvre du procédé selon l'invention.

L'installation comprend un réservoir 1 fermé de façon étanche par un couvercle 2 basculant sur lequel est fixée une lampe à UV 3 disposée à l'intérieur du réservoir 1 lorsque le couvercle 2 est fermé. Ce réservoir 1 est relié à un conduit 4 d'arrivée d'eau et à un conduit 5 de sortie. Le conduit 5 est muni d'une pompe péristaltique 6 qui envoie l'eau du réservoir 1 vers une vanne à trois voies 7 reliée, d'une part, à un conduit 8 d'injection et, d'autre part, à un conduit 9 de retour vers le réservoir 1 qui est muni d'un robinet 10 de réglage du débit.

Le conduit 8 d'injection est branché sur le conduit 11 de sortie du lait UHT stérilisé d'une installation 12 de stérilisation UHT du lait entrant en 13.

Le conduit 11 est relié à une installation 14 de conditionnement stérile de type Tétra Pak, dans laquelle le carton de l'emballage entre en 15 et l'emballage contenant le lait ensemencé sort en 16, après scellement.

Le fonctionnement est le suivant: on introduit de l'eau dans le réservoir 1 par le conduit 4 et on stérilise cette eau à l'aide de la lampe à UV 3. Puis on ouvre le couvercle 2, on introduit des germes de fermentation lactique sous forme de grêlons congelés, en maintenant pendant cette opération un courant ascendant de gaz chaud au-dessus de l'ouverture de façon à éviter d'introduire d'autres germes. On dispose ainsi d'un stock important de ferments lactiques dilués dans de l'eau stérile.

Par la pompe péristaltique 6, on envoie l'eau du réservoir 1 vers le conduit 8 en réglant le débit de retour vers le réservoir 1 par le robinet 10.

L'eau du réservoir 1 est ainsi injectée de façon dosée dans le conduit 11 de sortie du lait stérilisé UHT de l'installation 12 de stérilisation. Le lait ensemencé est alors conditionné de façon aseptique dans l'installation 15.

Les emballages pleins de lait ensemencé et qui ont été scellés dans l'installation 15 sont stockés à une température d'environ 20° C pendant une semaine, avant d'être expédiés.


**Revendications** pour les Etats contractants BE CH DE GB IT LI LU NL SE

1. Procédé de fabrication d'un lait fermenté pratiquement dépourvu de germes vivants, ayant une longue durée de conservation, caractérisé en ce que l'on introduit de façon aseptique des germes de fermentation lactique dans de l'eau stérilisée, on ajoute dans des conditions stériles l'eau contenant ces germes à du lait stérilisé UHT, on conditionne de façon aseptique le mélange obtenu dans des récipients stériles, puis on laisse se développer et s'achever la fermentation lactique au sein de ces récipients, obtenant ainsi un lait fermenté ne présentant pratiquement pas de germes vivants.

2. Procédé selon la revendication 1, caractérisé en ce que la stérilisation de l'eau est effectuée sous l'action d'un rayonnement ultraviolet.

3. Procédé selon l'une des revendications 1 ou 2, caractérisé en ce que l'addition de l'eau contenant les germes au lait stérilisé UHT est effectuée par injection de cette eau dans la canalisation conduisant le lait stérilisé UHT d'une installation de stérilisation UHT à une installation de conditionnement aseptique.

4. Procédé selon l'une des revendications 1 à 3, caractérisé en ce qu'on laisse se développer et s'achever la fermentation en conservant les récipients contenant le lait ensemencé à une température d'au moins 18° C pendant une semaine.

5. Procédé selon l'une des revendications 1 à 4, caractérisé en ce que les germes sont introduits dans l'eau stérilisée sous forme de grêlons congelés.

6. Procédé selon l'une des revendications 1 à 5, caractérisé en ce que les germes sont ajoutés à l'eau stérilisée à raison d'environ 1 g/l.

7. Procédé selon la revendication 6, caractérisé en ce que l'eau contenant les germes est ajoutée au lait stérilisé UHT à raison d'au moins 5 ml/l de lait.

8. Lait ayant subi une fermentation lactique, conditionné dans des récipients étanches et pratiquement dépourvu de germes vivants.

**Revendications** pour l'Etat contractant: AT

1. Procédé de fabrication d'un lait fermenté pratiquement dépourvu de germes vivants, ayant une longue durée de conservation, caractérisé en ce que l'on introduit de façon aseptique des germes de fermentation lactique dans de l'eau stérilisée, on ajoute dans des conditions stériles l'eau contenant ces germes à du lait stérilisé UHT, on conditionne de façon aseptique le mélange obtenu dans des récipients stériles, puis on laisse se développer et s'achever la fermentation lactique au sein de ces récipients, obtenant ainsi un lait fermenté ne présentant pratiquement pas de germes vivants.

2. Procédé selon la revendication 1, caractérisé en ce que la stérilisation de l'eau est effectuée sous l'action d'un rayonnement ultraviolet.

3. Procédé selon l'une des revendications 1 ou 2, caractérisé en ce que l'addition de l'eau contenant les germes au lait stérilisé UHT est effectuée par injection de cette eau dans la canalisation conduisant le lait stérilisé UHT d'une installation de stérilisation UHT à une installation de conditionnement aseptique.

4. Procédé selon l'une des revendications 1 à 3, caractérisé en ce qu'on laisse se développer et s'achever la fermentation en conservant les récipients contenant le lait ensemencé à une température d'au moins 18° C pendant une semaine.

5. Procédé selon l'une des revendications 1 à 4, caractérisé en ce que les germes sont introduits dans l'eau stérilisée sous forme de grêlons congelés.

6. Procédé selon l'une des revendications 1 à 5, caractérisé en ce que les germes sont ajoutés à l'eau stérilisée à raison d'environ 1 g/l.

7. Procédé selon la revendication 6, caractérisé en ce que l'eau contenant les germes est ajoutée au lait stérilisé UHT à raison d'au moins 5 ml/l de lait.

**Claims** for the contracting States BE, CH, DE, GB, IT, LI, LU, NL, SE

1. Process for the production of a fermented milk substantially free from live germs, having a long preservation time, characterized by aseptically introducing lactic fermentation germs into sterilized water, adding under sterile conditions the water containing said germs to UHT-sterilized milk, aseptically packing the resulting mixture in sterile containers, and allowing the lactic fermentation to develop to completion within said containers, thereby obtaining a fermented milk substantially free from live germs.

2. Process as claimed in claim 1, characterized in that the addition of the germ-containing water to the UHT-sterilized milk is effected by injection of said water into the pipe leading the UHT-sterilized milk from an UHT-sterilization unit to an aseptic packing unit.

3. Process as claimed in claim 1 or 2, characterized in that the addition of the germ-containing water to the UHT-sterilized milk is effected by injection of said water into the pipe leading the UHT-sterilized milk from an UHT-sterilization unit to an aseptic packing unit.

4. Process as claimed in any one of the claims 1 to 3, characterized in that the fermentation is allowed to develop and to come to completion by storing the containers containing the seeded milk at a temperature of a least 18° C for a period of time of at least one week.

5. Process as claimed in any one of the claims 1 to 4, characterized in that the germs are introduced into the sterilized water as frozen granules.

6. Process as claimed in any one of the claims 1 to 5, characterized in that the germs are added to the sterilized water in an amount of about 1 g/l.

7. Process as claimed in claim 6, characterized in that the germ-containing water is added to the UHT-sterilized milk in an amount of at least 5 ml/l of milk.

8. Milk having undergone a lactic fermentation, packed in sealed containers and substantially free from live germs.

**Claims** for the contracting State: AT

1. Process for the production of a fermented milk substantially free from live germs, having a long preservation time, characterized by aseptically introducing lactic fermentation germs into sterilized water, adding under sterile conditions the water containing said germs to UHT-sterilized milk, aseptically packing the resulting mixture in sterile containers, and allowing the lactic fermentation to develop to completion within said containers, thereby obtaining a fermented milk substantially free from live germs.

2. Process as claimed in claim 1, characterized in that the addition of the germ-containing water to the UHT-sterilized milk is effected by injection of said water into the pipe leading the UHT-sterilized milk from an UHT-sterilization unit to an aseptic packing unit.

3. Process as claimed in claim 1 or 2, characterized in that the addition of the germ-containing water to the UHT-sterilized milk is effected by injection of said water into the pipe leading the UHT-sterilized milk from an UHT-sterilization unit to an aseptic packing unit.

4. Process as claimed in any one of the claims 1 to 3, characterized in that the fermentation is allowed to develop and to come to completion by storing the containers containing the seeded milk at a temperature of at least 18° C for a period of time of at least one week.

5. Process as claimed in any one of the claims 1 to 4, characterized in that the germs are introduced into the sterilized water as frozen granules.

6. Process as claimed in any one of the claims 1 to 5, characterized in that the germs are added to the sterilized water in an amount of about 1 g/l.

7. Process as claimed in claim 6, characterized in that the germ-containing water is added to the UHT-sterilized milk in an amount of at least 5 ml/l of milk.

**Patentansprüche** für die Vertragsstaaten BE, CH, DE, GB, IT, LI, LU, NL, SE

1. Verfahren zur Herstellung einer von lebenden Keimen praktisch freien fermentierten Milch mit langer Aufbewahrungsdauer, dadurch gekennzeichnet, dass man in aseptischer Weise Keime der Milchsäuregärung in sterilisiertes Wasser einführt, unter sterilen Bedingungen das diese Keime enthaltende Wasser UHT-sterilisierter Milch zusetzt, in aseptischer Weise das erhaltene Gemisch in sterile Behälter verpackt und dann die Milchsäuregärung in diesen Behältern sich entwickeln und vollenden lässt und in dieser Weise eine fermentierte Milch erhält, die praktisch keine lebenden Keime aufweist.

2. Verfahren nach Anspruch 1, dadurch gekennzeichnet, dass die Sterilisation des Wassers unter der Einwirkung von UV-Bestrahlung vorgenommen wird.

3. Verfahren nach einem der beiden Ansprüche 1 oder 2, dadurch gekennzeichnet, dass der Zusatz des die Keime enthaltenden Wassers zur UHT-sterilisierten Milch durch Injektion dieses Wassers in die Leitung vorgenommen wird, die die UHTsterilisierte Milch von einer UHT-Sterilisationsanlage zu einer Anlage zur aseptischen Verpackung führt.

4. Verfahren nach irgendeinem der Ansprüche 1 bis 3, dadurch gekennzeichnet, dass man die Gärung sich entwickeln und vollenden lässt, indem man die die geimpfte Milch enthaltenden Behälter während einer Woche bei einer Temperatur von wenigstens 18°C hält.

5. Verfahren nach irgendeinem der Ansprüche 1 bis 4, dadurch gekennzeichnet, dass die Keime in das in Form von gefrorenen Stücken sterilisierte Wasser eingeführt werden.

6. Verfahren nach irgendeinem der Ansprüche 1 bis 5, dadurch gekennzeichnet, dass die Keime dem sterilisierten Wasser in einer Menge von etwa 1 g/l zugesetzt werden.

7. Verfahren nach Anspruch 6, dadurch gekennzeichnet, dass das die Keime enthaltende Wasser der UHT-sterilisierten Milch in einer Menge von wenigstens 5 ml/l Milch zugesetzt wird.

8. Milch, die einer Milchsäuregärung unterworfen, in dichte Behälter verpackt worden und praktisch frei von lebenden Keimen ist.

**Patentansprüche** für den Vertragsstaat: AT

1. Verfahren zur Herstellung einer von lebenden Keimen praktisch ferien fermentierten Milch mit langer Aufbewahrungsdauer, dadurch gekennzeichnet, dass man in aseptischer Weise Keime der Milchsäuregärung in sterilisiertes Wasser einführt, unter sterilen Bedingungen das diese Keime enthaltende Wasser UHT-sterilisierter Milch zusetzt, in aseptischer Weise das erhaltene Gemisch in sterile Behälter verpackt und dann die Milchsäuregärung in diesen Behältern sich entwickeln und vollenden lässt und in dieser Weise eine fermentierte Milch erhält, die praktisch keine lebenden Keime aufweist.

2. Verfahren nach Anspruch 1, dadurch gekennzeichnet, dass die Sterilisation des Wassers unter der Einwirkung von UV-Bestrahlung vorgenommen wird.

3. Verfahren nach einem der beiden Ansprüche 1 oder 2, dadurch gekennzeichnet, dass der Zusatz des die Keime enthaltenden Wassers zur UHT-sterilisierten Milch durch Injektion dieses Wassers in die Leitung vorgenommen wird, die die UHTsterilisierte Milch von einer UHT-Sterilisationsanlage zu einer Anlage zur aseptischen Verpackung führt.

4. Verfahren nach irgendeinem der Ansprüche 1 bis 3, dadurch gekennzeichnet, dass man die Gärung sich entwickeln und vollenden lässt, indem man die die geimpfte Milch enthaltenden Behälter während einer Woche bei einer Temperatur von wenigstens 18°C hält.

5. Verfahren nach irgendeinem der Ansprüche 1 bis 4, dadurch gekennzeichnet, dass die Keime in das in Form von gefrorenen Stücken sterilisierte Wasser eingeführt werden.

6. Verfahren nach irgendeinem der Ansprüche 1 bis 5, dadurch gekennzeichnet, dass die Keime dem sterilisierten Wasser in einer Menge von etwa 1 g/l zugesetzt werden.

7. Verfahren nach Anspruch 6, dadurch gekennzeichnet, dass das die Keime enthaltende Wasser der UHT-sterilisierten Milch in einer Menge von wenigstens 5 ml/l Milch zugesetzt wird.

FIG. 1

# FIG.2